# EUROPEAN PATENT APPLICATION

(11) **EP 3 480 657 A1**
(43) Date of publication of application: **08.05.2019**
(21) Application number: 17819228.2
(22) Date of filing: 27.06.2017
(51) Int. Cl.: G03B 37/00, G03B 17/17

(54) **IMAGE ACQUISITION COMPOUND LENS AND APPLICATION THEREOF**

(30) Priority: 01.07.2016 CN 201610504068
(71) Applicant: Yan, Ping, Beijing 100078 (CN)
(72) Inventor: Yan, Ping, Beijing 100078 (CN)
(74) Representative: Inchingalo, Simona
(86) International application number: PCT/CN2017/090247
(87) International publication number: WO 2018/001231

(57) **Abstract**

Disclosed are an image acquisition compound lens and application thereof. The image acquisition compound lens includes a camera lens (1) and two or more convex mirrors (2) having a same shape, wherein, the camera lens (1) has a predetermined front field of view (40); the two or more convex mirrors (2) having the same shape are symmetrically disposed with respect to an optical axis (c) of the camera lens (1) within the predetermined front field of view (40) of the camera lens (1), and configured to reflect partial views beside and behind the camera lens (1) to the camera lens (1) respectively; a mirror gap (30) is formed between the convex mirrors (2) symmetrically disposed, allowing the mirror lens (1) to directly acquire views within a first front field of view (10) right in front of the mirror lens. The disclosure can directly acquire images within the first front field of view (10) through the mirror lens (1), while photographing images of views surrounding and behind the camera lens (1) through the convex mirrors (2), thereby an effect of a full spherical coverage of views can be approximately achieved.

## Description

### CROSS-REFERENCE TO RELATED APPLICATIONS

This application claims the priority of Chinese Patent Application No. 201610504068.2, filed on July 1, 2016, entitled "Omnidirectional Image Acquisition Compound Lens", the disclosure of which is hereby incorporated by reference in its entirety.

### FIELD OF TECHNOLOGY

This application relates to the field of an optical lens, in particular to an image acquisition compound lens and application thereof.

### BACKGOUND

At present, a typical panoramic lens usually expands the range of view angle by means of a curved mirror, and a conventional camera is adopted to obtain a range of vision of the surrounding views. For example, Chinese Patent Application Publication No. CN1975554A describes a panoramic vision system based on a hyperbolic viewfinder, aiming to improve the curved mirror mentioned above, reduce the complexity and difficulty of the system design and obtain a wider applicability. With the development of image processing electronic technology (especially computer graphics), a technique of obtaining a normal perspective panoramic effect by superimposing and correcting the acquired images is also disclosed, for example, Chinese Patent Application Publication No. CN104835117A describes a method of generating spherical panorama in an overlapping manner. The method includes performing pixel fusion based on an image fusion principle, numerically calculating the overlapping regions of two hemisphere spaces, quantitatively calculating the relative positions of pixel points according to the positional relationship of the overlapping regions, and generating a spherical panorama by mapping the points on the spherical space to the spherical panorama according to the spherical panorama generation principle.

As can be seen from the two typical panoramic image acquisition technologies mentioned above, although the former has a simple structure, it can not obtain the omnidirectional vision covering the full spherical surface in the true sense, but can only obtain the surrounding views within the reflection range of the curved mirror since the image is acquired by the reflection of the curved mirror disposed right above the lens; the latter requires complex calculation to obtain virtual images, wherein an image processing device needs to be incorporated, which results in the complicated structure and high cost, moreover, there is a probability that the virtual images obtained after data processing still cannot be used as a judicial evidence, for example, it may be troublesome in occasions which require judicial forensics, such as vehicle insurance claims, accident monitoring, and so on.

### SUMMARY

An objective of the present invention is to provide an image acquisition compound lens and an application thereof, to overcome the defects of the above-mentioned conventional structures and methods, and obtain a technical effect of an approximate spherical panorama than surrounding views, through a simple optical direct imaging structure, for use in the omnidirectional image acquisition.

An image acquisition compound lens includes a camera lens and a plurality of convex mirrors having a same shape, wherein, the camera lens has a predetermined optical view angle and a predetermined front field of view determined according to the optical view angle; the plurality of convex mirrors having the same shape are symmetrically disposed within the predetermined front field of view of the camera lens with respect to an optical axis c of the camera lens, and configured to reflect partial views beside and behind the camera lens to the camera lens respectively; a mirror gap is formed between the convex mirrors symmetrically disposed, allowing the mirror lens to directly acquire views within a first front field of view right in front of the mirror lens.

In an embodiment, the number of the convex mirrors is two.

In an embodiment, the convex mirror is a spherical mirror.

In an embodiment, the convex mirror is a parabolic mirror.

In an embodiment, the convex mirror is a hyperbolic mirror.

In an embodiment, an overlapping region is formed between fields of view reflected by adjacent convex mirrors.

In an embodiment, the camera lens is a zoom lens.

In an embodiment, the image acquisition compound lens further includes an image electronic processing device connected to the camera lens.

In an embodiment, the convex mirror has a sector structure with a central angle of 180° or more.

In an embodiment, the plurality of convex mirrors having the same shape collectively reflect all the views beside and behind the camera lens to the camera lens.

Use of the image acquisition compound lens in a vehicle is disclosed.

Advantageous Effects of the Invention: According to the present application, by replacing a conventional convex mirror disposed in front of a camera lens with a plurality of convex mirrors arranged symmetrically, the field of view right in front of the camera lens cannot be obstructed; an omnidirectional field of surrounding views will be acquired without any omission by an appropriate overlapping of the fields of view of the plurality of convex mirrors; and the camera lens can cover or even include the majority of the spherical fields of view behind the camera lens to the utmost extent by selecting the appropriate focal length, view angle, aperture of the camera lens and by properly adjusting the curvature, tilt angle, position and mirror aperture of the plurality of convex mirrors. Thereby, images for views within the first front field of view in the front can be directly photographed by the camera lens, while the surrounding views and partial views behind the camera lens can be acquired through the convex mirrors, so that an approximate full coverage of the spherical field of view is achieved. Since the raw images are directly acquired by the geometric optical imaging system, and the system is capable of simultaneously, synchronously, two-way photographing and recording the information, causes, processes and results of an event and the two (multi) parties associated with the event, it is especially beneficial to occasions such as insurance claims, accident identification and where judicial forensics are required, and so on.

### DESCRIPTION OF THE DRAWINGS

In order to make the content of the present application easier to understand, the present application will be further described in detail below in accordance with the specific embodiments and the accompanying drawings of the present application, wherein:
Figures 1A-1B are schematic diagrams showing the arrangement and framing principle of the convex mirrors provided by the present application;
Figure 2 schematically shows a front view of a compound lens provided by the present application and an omnidirectional imaging principle;
Figure 3 is a top view of Figure 2;
Figure 4 is a side view of Figure 2;
Figure 5 is a schematic diagram showing the effect of the omnidirectional framing range provided by the present application;
Figures 6A-6D are schematic diagrams of applying the compound lens provided by the present application to vehicle status monitoring;
Figure 7 shows an image acquisition effect of a field of view in the front of the camera lens in Figure 6;
Figure 8 shows an image acquisition effect of a field of surrounding views through the convex mirrors in Figure 6.

Description of reference numerals: camera lens 1, first front field of view 10, convex mirror 2, equivalent convex mirror 20, cutting line 21, transparent cover 3, mirror gap 30, predetermined front field of view 40, camera lens node O, optical axis c of a camera lens.

### DETAILED DESCRIPTION OF EMBODIMENTS

In order to make the objects, technical solutions and advantages of the present application more clear, the embodiments of the present application will be further described in detail below with reference to the accompanying drawings.

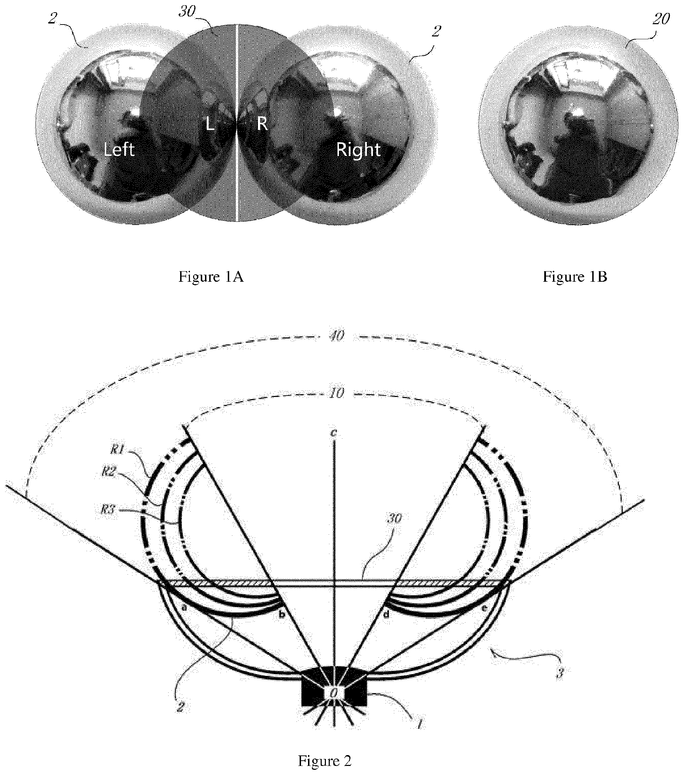

Figure 1 shows the arrangement and framing principle of the convex mirrors 2 in the omnidirectional image acquisition compound lens structure of the present application as the core technology and structural principle. Based on the basic principle of geometric optics, the convex mirror 2 generally has a circular projection shape with high efficiency, and the mirror structure of the convex mirrors described hereafter in the present application has the circular projection shape unless otherwise stated. It should be understood that in other embodiments, the structure of the convex mirror 2 can be selected according to actual needs, for example, when performing panoramic VR shooting, the convex mirror 2 can be attained by cutting a right circular convex mirror; and when the screen ratio of the display used is 16:9, the convex mirror 2 can be obtained by cutting a convex mirror with an aspect ratio of 16:9.

Referring to Figure 1 and Figure 2, two adjacent convex mirrors 2 labeled "left" and "right" are showed in Figure 1A, and the technical effect of a field of view equivalent to that of a single complete full-circular convex mirror such as the equivalent full-circular convex mirror 20 shown in Figure 1B can be attained by symmetrically cutting the two adjacent mirror surfaces covered by the shaded portions "L" and "R" in the figure and forming a mirror gap 30 therebetween. The mirror gap 30 is beneficial in that the camera lens 1 can directly photograph views within the first field of view 10 in front of the camera lens 1 while acquiring the surrounding views reflected by the convex mirrors 2. The predetermined view field 40 in front of the camera lens 1 (including the field of view reflected by the convex mirror 2 and the first field of view 10 directly acquired by the camera lens 1) depends on the view angle determined by the preset focal length of lens, and if the camera lens 1 use a zoom lens, the view angle can be arbitrarily changed within the range of focal length variation. The fields of view at the two sides obtained by reflection may partially overlap, when a larger portion of the area of the mirror (or a smaller mirror gap 30) is retained depending on the different cutting degree of the convex mirrors 2 at the two sides; while the fields of view at the two sides may be discontinued when cutting excessively, that is, retaining a smaller portion of the area of the mirror (or a larger mirror gap 30). In general, as long as the remaining portion is larger than half of the circular surface, a field of view of the equivalent full-circular convex mirror as shown in Figure 1B can be relatively easily obtained. In particular, a certain overlapping region is formed between the fields of view of adjacent convex mirrors 2, which currently can be easily de-duplicated through processing by an image electronic processing system and continuous images can be obtained for recording or displaying. The cut convex mirror 2 may have a sector structure with a central angle of 180° or more. It should be understood that in other embodiments, the cut convex mirror 2 may have a rectangular structure.

In summary, in term of the framing space, with the convex mirrors 2 provided, the camera lens 1 can simultaneously obtain the first front field of view 10 of the lens (the above smaller half of the spherical space, within the predetermined front field of view 40) and the framing range of the below larger half of the spherical space through reflection.

Figure 2 shows the mechanical structure and geometrical optics of the compound lens of the present application. The camera lens 1 is disposed at the bottom of the transparent cover 3, and the camera lens 1 has a preset view angle range 40 corresponding to ∠aOe shown in the figure, wherein O is a node of the camera lens 1. Two convex mirrors 2 symmetrically disposed at the two sides of the optical axis c of the camera lens 1 can symmetrically select different curvatures, projection radii and mounting angles, and R1, R2 or R3 shown in the figure illustrates multiple choices of the radii of curvature of different convex mirrors 2, but the positions and shapes of the convex mirrors 2 must be completely symmetrically arranged and be located within the range of the view angle ∠aOe of the camera lens 1, so that the camera lens 1 can acquire all the views through reflection without any omission and can directly obtain the vision in the first front field of view 10 right in the front through the mirror gap 30; the effective reflection regions of the convex mirrors 2 are within the range indicated by the arcs a 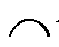 b and d 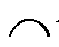 e. In an embodiment, the size of the mirror gap 30 may be equal to the diameter of the equivalent full-circle convex mirror 20. Apparently, according to the basic principle of geometric optics, the convex mirror can choose different projection radii and curvatures. The smaller the radius of curvature R is, the larger the curvature is, the larger the distortion of the reflected image is, and the wider the reflection field of view is. Conversely, the larger the radius of curvature R is, the smaller the distortion of the reflected image is, and the narrower the reflection field of view is. In practical applications, it is required to perform the appropriate coordination and selection according to occasions and purposes.

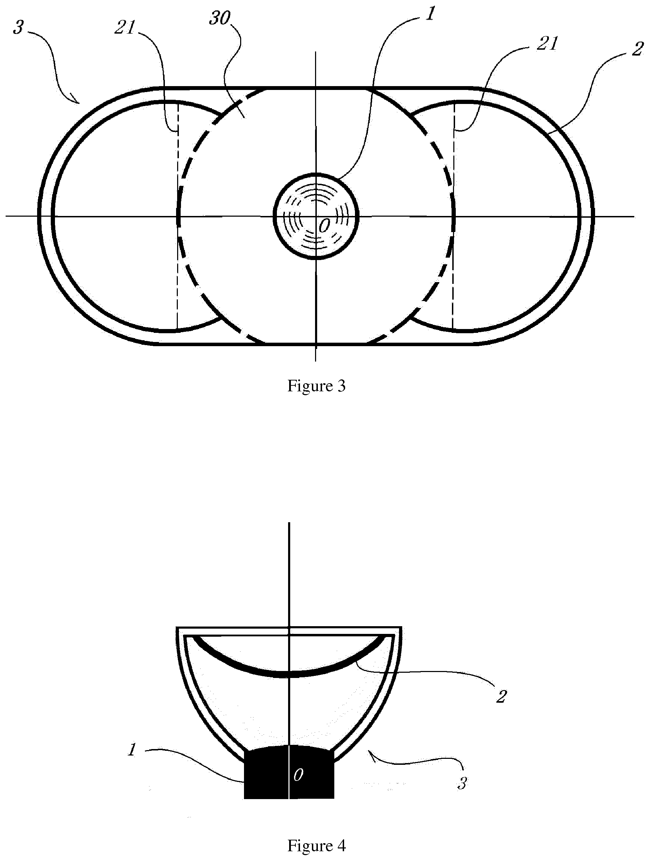

According to Figures 3 and 4, the mirror gap 30 of the two convex mirrors 2 can be attained by cutting along the chord line indicated by the cutting line 21 when viewed from the top (i.e., in a front projection direction). When selecting the position of the chord line, as mentioned above, when the retained mirror area is larger, a certain overlapping region will be formed between the reflection fields of view of the mirrors at the two sides (can be de-duplicated by the post-image processing software). On the contrary, if the retained mirror area is too small, the discontinuity of the reflection view range may occur. All of these problems can be solved by comprehensively coordinating and setting the curvature of the convex mirror 2, the mounting angle, the projection radius, the set view angle of the camera lens 1, and the distance to the camera lens 1 according to application occasions, so as to achieve the desired field of view. A preferred way is to use a zoom lens to conveniently adjust the range of view angles; and the convex mirror 2 can adopt a mirror shape such as sphere, a paraboloid, a hyperboloid or the like according to the requirements for image aberration and distortion. With the above setting, in the ideal case where the framing range is most fully acquired, the framing range can cover almost the full spherical surface except for a small portion shielded by the convex mirrors 2 at two sides and by the camera lens 1 itself.

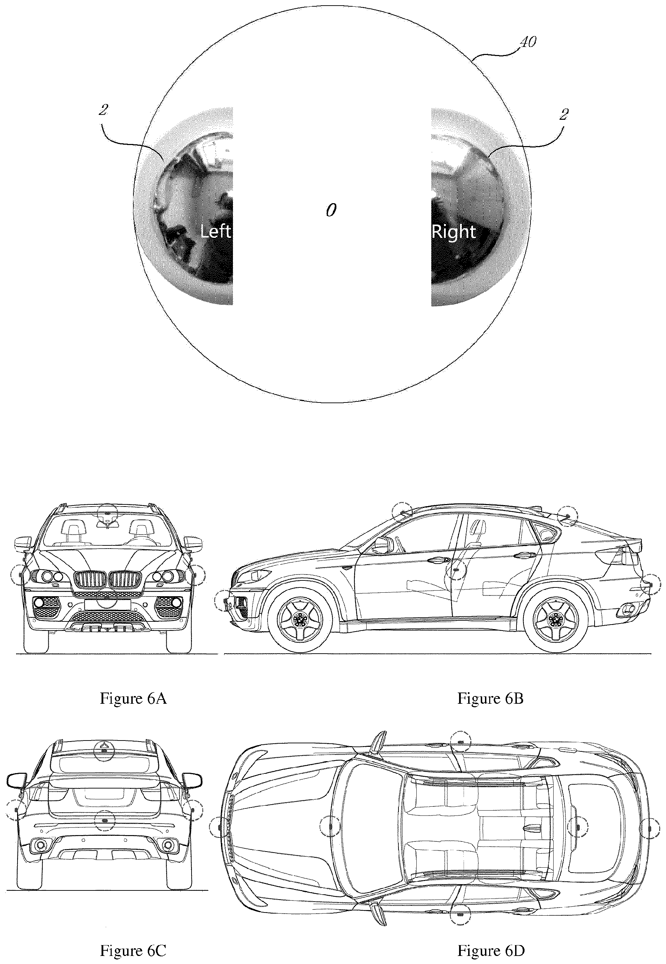

According to Figure 5, the camera lens 1 can directly acquire the views within the first front field of view 10; the two convex mirrors 2 symmetrically arranged within the predetermined front view 40 of the camera lens 1 reflect the surrounding and rear views to the camera lens 1, i.e., the camera lens 1 simultaneously acquires the full spherical vision. According to the foregoing discussion, when the projection radius of the convex mirror 2 and the mounting angle are matched with geometric optical parameters such as the view angle of the camera lens, the first front field of view 10 determined by the view angle of the camera lens 1 and the surrounding and rear fields of view reflected by the convex mirrors 2 can be completely stitched without gaps.

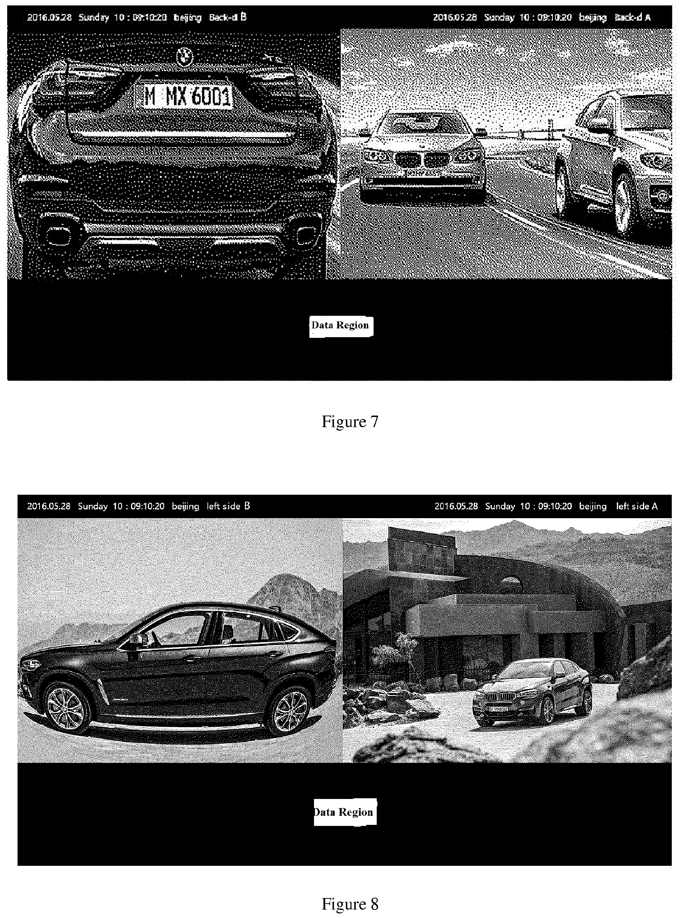

Figures 6A to 6D show an embodiment of the compound lens for monitoring vehicle status. Since the compound lens of the present application has an extremely simple optical and mechanical structure, it can be made in a very small size, which is beneficial to be simultaneously or selectively installed on every part (such as the position indicated by the dotted circle in the figure) of a vehicle body and achieves the technical effect of omnidirectionally, simultaneously, synchronously, two-way monitoring and recording of an event and the two (multi) parties associated with the event. The advantages are self-evident compared to the traditional driving recorder. Figures 7 and 8 show image acquisition effects of the compound lens of the present application disposed on various parts of the vehicle body according to Figure 6, displayed by an electronic screen. The camera lens 1, through an image electronic processing device connected, can simply process the raw images captured by the entire compound lens, such as de-duplication, correction, stitching, overlapping, and electronically displaying.

It is apparent that the above-described embodiments are merely illustrative examples, and are not intended to limit the embodiments. Other variations or modifications of various forms may be made by those skilled in the art in light of the above description. There is no need and no way to exhaust all of the implementations. Obvious changes or variations resulting therefrom are still within the scope of the present application.

## Claims

1. An image acquisition compound lens, comprising a camera lens (1) and a plurality of convex mirrors (2) having a same shape, wherein, the camera lens (1) has a predetermined optical view angle and a predetermined front field of view (40) determined according to the optical view angle; the plurality of convex mirrors (2) having the same shape are symmetrically disposed within the predetermined front field of view (40) of the camera lens (1) with respect to an optical axis c of the camera lens (1), and configured to reflect partial views beside and behind the camera lens (1) to the camera lens (1) respectively; a mirror gap (30) is formed between the convex mirrors (2) symmetrically disposed, allowing the mirror lens (1) to directly acquire views within a first front field of view right in front of the mirror lens (1).

2. The image acquisition compound lens according to claim 1, **characterized in that** the number of the convex mirrors (2) is two.

3. The image acquisition compound lens according to claim 1 or 2, **characterized in that** the convex mirror (2) is a spherical mirror.

4. The image acquisition compound lens according to claim 1 or 2, **characterized in that** the convex mirror (2) is a parabolic mirror.

5. The image acquisition compound lens according to claim 1 or 2, **characterized in that** the convex mirror (2) is a hyperbolic mirror.

6. The image acquisition compound lens according to claim 1 or 2, **characterized in that** an overlapping region is formed between fields of view reflected by adjacent convex mirrors (2).

7. The image acquisition compound lens according to claim 1 or 2, wherein the camera lens (1) is a zoom lens.

8. The image acquisition compound lens according to claim 1 or 2, **characterized by** further comprising an image electronic processing device connected to the camera lens (1).

9. The image acquisition compound lens according to claim 1 or 2, **characterized in that** the convex mirror (2) has a sector structure with a central angle of 180° or more.

10. The image acquisition compound lens according to claim 1, **characterized in that** the plurality of convex mirrors (2) having the same shape collectively reflect all the views beside and behind the camera lens (1) to the camera lens (1).

11. Use of the image acquisition compound lens according to any one of claims 1 to 10 in a vehicle.
